# EUROPEAN PATENT SPECIFICATION

(11) **EP 0 451 937 B1**
(45) Date of publication and mention of the grant of the patent: **21.09.1994**
(21) Application number: 91301249.8
(22) Date of filing: 15.02.1991
(51) Int. Cl.: F16D 49/08

(54) **One-piece transmission band having the apply and reaction members integrally formed in the base material**
Einstückiges Bremsband mit im Basismaterial integralen Betätigungs- und Reaktionsgliedern
Bande de frein en une pièce ayant des éléments d'actionnement et de réaction intégrés au matériau de base

(30) Priority: 12.04.1990 US 508864
(43) Date of publication of application: 16.10.1991
(73) Proprietor: BORG-WARNER AUTOMOTIVE TRANSMISSION AND ENGINE COMPONENTS CORPORATION, Sterling Heights, Michigan 48311-8022 (US)
(72) Inventor: Puchalla, Christopher P., Lombard, Illinois 60148 (US)
(74) Representative: Allden, Thomas Stanley

(56) References cited:
- DE-B- 1 253 965
- US-A- 2 692 663

## Description

The present invention relates to a band for use with a transmission assembly which is disposed to control movement of transmission members.

Transmission bands are commonly used to act as a brake or clutch. The interior circumference of the bands is lined with a friction material. The ends of the bands generally have brackets or lugs known as apply and reaction members which usually anchor the band member and engage pin members within the transmission. The pin members work with the apply and reaction members to push the band ends together to decrease the circumference of the band and cause the band to frictionally engage rotating members within the transmission, thereby braking those members to a stop. With the advent of lighter weight transmissions and demands for fuel efficiency, research has centered around producing transmission bands of lighter weight materials and thinner cross-sections. These attempts to produce lighter weight bands have produced certain problems with the overall quality of the transmission bands.

Generally, typical single wrap transmission bands include a strap member having a friction lining about the interior circumference with separate apply and reaction members attached to the ends of the strap member. The apply and reaction members are usually lugs or brackets which generally attached to the strap by an appropriate means such as a tab lance, extrusion, spot weld, or structural adhesive. The newer, lighter, thinner bands have encountered problems with this type of construction due to the fact that apply and reaction members which are attached to the strap have a thick cross-section. As a result, the band does not have the desired flexibility at the location where the apply and reaction members are attached and the band sometimes does not engage with uniformity around the rotating transmission pieces. Therefore, there is an enhanced possibility of uneven wear of the transmission band.

Further, problems have been encountered in the manufacture of common transmission bands wherein the apply and reaction members are not always correctly aligned with the strap when they are attached to the strap. If an unaligned band is utilized in a transmission, there is again an enhanced possibility of uneven wear and future breakdown of the transmission member.

One example of such prior art transmission bands is shown in US-A-2692663 which generally discloses a band member for use as a circumferential friction brake or clutch about a rotating member, comprising a strap member of a determined cross-sectional thickness and extending in a generally circular configuration to form an inner strap circumference and an outer strap circumference, a friction lining disposed about the inner strap circumference of the strap member, the strap member having two end portions which are folded back over the outer strap circumference of the strap member, an apply member at one of the end portions of the strap member, and a reaction member at the other end portion of the strap member.

In accordance with the present invention as claimed the aforesaid generally disclosed band member is characterised in that the end portions are configured to be double said cross-sectional thickness of the strap member and formed by folding a single thickness portion of the strap member flat back over the outer strap circumference of the strap member, the apply and reaction members being formed from the respective end portions of the strap member and spaced from the respective fold area.

By integrally forming the apply and reaction members from the strap material a one piece transmission band is provided which achieves the proper alignment of the apply and reaction members with the strap and further enables the transmission band to more uniformly engage the rotating member, thereby reducing uneven wear of the transmission band.

In order that the invention may be well understood there will now be described two embodiments thereof, given by way of example, reference being made to the accompanying drawings, in which:
Fig. 1 is a side view of a transmission band embodying the present invention having a formed apply member and volcano-type reaction member;
Fig. 2 is a detailed view of the reaction member of the band of Fig. 1 taken along line 2-2 of Fig. 1;
Fig. 3 is a detailed view of the apply member of the band of Fig. 1 taken along line 3-3 of Fig. 1;
Fig. 4 is a side view of an alternative embodiment of the transmission band of the present invention also showing the apply pin and reaction pin in ghost detail; and
Fig. 5 is a front view of the transmission band of Fig. 4.

In the drawings, band assembles 10 constructed in accordance with the present invention are generally shown. A strap member 12 is arranged in a circular configuration so as to be placed around the circular transmission members (not shown). The strap member 12 includes a friction member 14 adhered to the inner circumference of the strap member 12. The end portions 16 of the strap member 12 are formed by any suitable process into the appropriate and desired apply member 18 and reaction member 20.

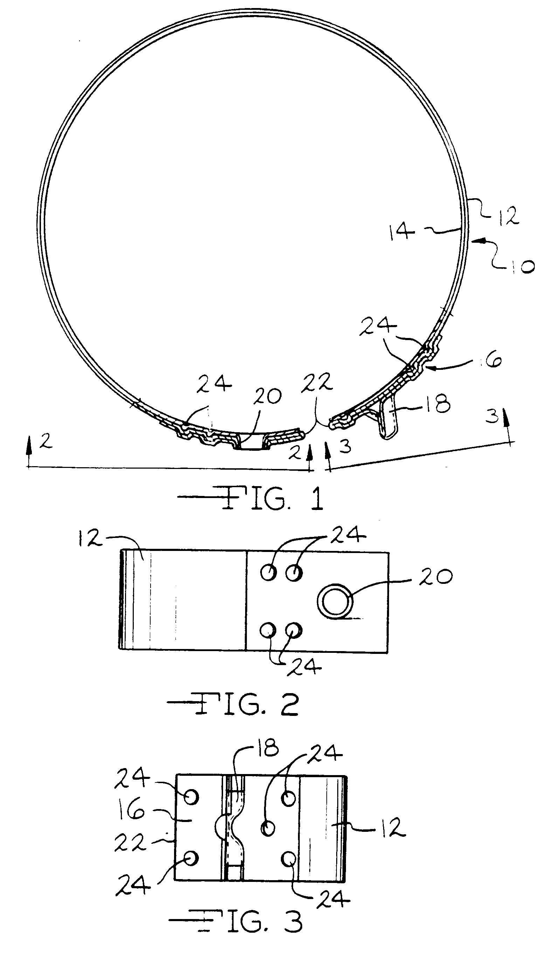

Referring now to Figs. 1-3, a preferred embodiment of the band member 10 is shown. The band member includes a strap member 12 having a friction member 14 adhered to the inner circumference of the strap member 12. The apply member 18, shown in detail in Fig. 3, is formed on the inner circumference of an end portion 16. The end portion 16 with the integrally formed apply member 18 is then folded 22 flat back over the outer circumference of the strap member 12 to form a double thickness of the strap member and adhered 24 to its outer circumference by welding or any other suitable mechanical fastening means. The remaining end portion 16 is folded 22 similarly flat back over and also adhered 24 to the outer circumference of the strap member 12. As shown in detail in Fig. 2, the reaction member 20 is then integrally formed by stamping through the combined strap member 12 and folded over end portion 16. As shown in Fig. 2, the reaction member 20 is a volcano-type member. Both the apply (18) and reaction (20) members are proximate to but spaced from the respective fold area 22.

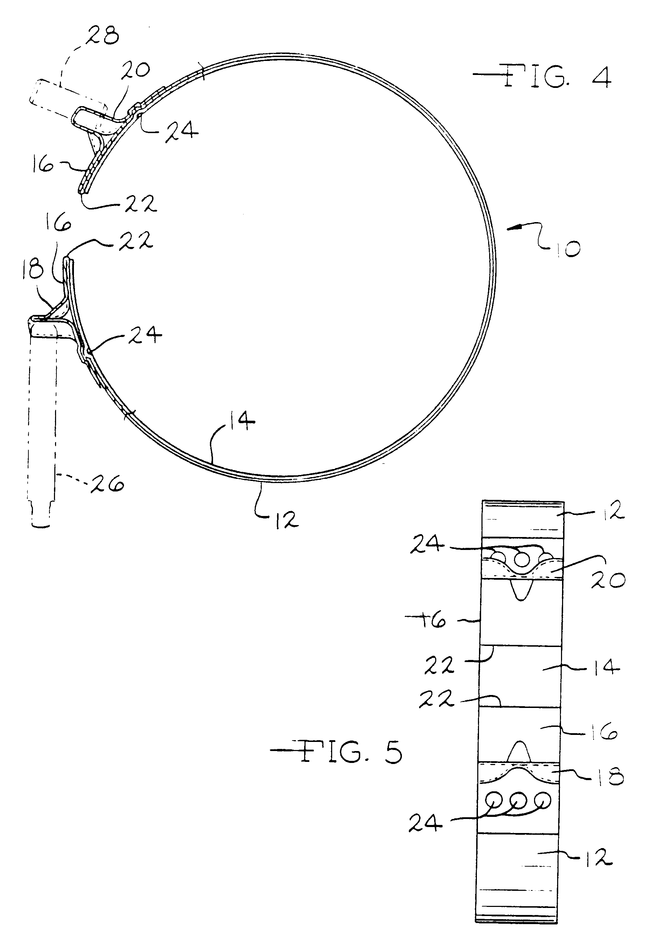

Referring now to Figs. 4 and 5, an alternative embodiment of the band member 10 includes a strap member 12 having a friction member 14 adhered to the inner circumference. The apply member 18 and the reaction member 20 are integrally formed on the end portions 16 on the inner circumference of the strap member 12. After forming the apply member 18 and reaction member 20, the end portions 16 of the strap member are folded flat back as before over the outer circumference of the strap member 12 so that the apply member 18 and reaction member 20 are located the outer circumference of the strap member 12 proximate to but spaced from the fold area 22. The folded over end portions 16 are then attached to the strap member by an appropriate means of adhesion 24 such as extrusion, tab lance, spot welding or the application of a structural adhesive. Shown in Fig. 4, in ghost, is the proximate locations for the push pin 26 as it is engaged with the apply member 18 and an anchor pin 28 as it is engaged with the reaction member 20.

In a further alternative embodiment of the band member (not shown), the apply member and the reaction member are formed after the end portions are folded flat back over said strap member.

## Claims

1. A band member for use as a circumferential friction brake or clutch about a rotating member, comprising a strap member (12) of a determined cross-sectional thickness and extending in a generally circular configuration to form an inner strap circumference and an outer strap circumference, a friction lining (14) disposed about the inner strap circumference of the strap member (12), the strap member (12) having two end portions (16) which are folded (22) back over the outer strap circumference of the strap member (12), an apply member (18) at one of the end portions (16) of the strap member (12), and a reaction member (20) at the other end portion (16) of the strap member (12), characterised in that the end portions (16) are configured to be double said cross-sectional thickness of the strap member (12) and formed by folding a single thickness portion of the strap member (12) flat (22) back over the outer strap circumference of the strap member (12), the apply (18) and reaction (20) members being formed from the respective end portions (16) of the strap member (12) and spaced from the respective fold area (22).

2. A band member as claimed in claim 1, wherein the apply member (18) and the reaction member (20) are formed prior to the end portions (16) being folded (22) back over the strap member (12), wherein the apply member (18) is formed on the inner circumference of the single thickness strap member (12) and the single thickness apply member (18) is folded flat (22) back over the outer strap circumference to double said cross-sectional thickness at the end portion (16), and wherein the other end portion (16) has the reaction member (20) formed on the inner circumference of the single thickness strap member (12) and the single thickness reaction member (20) is folded flat (22) back over the outer strap circumference to double said cross-sectional thickness at the other end portion (16).

3. A band member as claimed in claim 1, wherein the apply member (18) and the reaction member (20) are formed after the end portions (16) are folded (22) back over the strap member (12).

4. A band member as claimed in claim 1, wherein the apply member (18) is formed prior to one end portion (16) being folded (22) back over the strap member (12) and the reaction member (20) is formed after the other end portion (16) is folded (22) back over the strap member (12), wherein the apply member (18) is formed in the single thickness strap member (12) and the single thickness apply member (18) is folded flat (22) back over the outer strap circumference to double said cross-sectional thickness at the end portion (16), the other end portion (16) being configured to be double said cross-sectional thickness by folding a single thickness portion of the strap member (12) flat (22) back over the outer circumference and having the reaction member (20) formed thereon.

## Patentansprüche

1. Band zur Verwendung als Umschlingungs-Reibbremse oder -Kupplung für ein umlaufendes Teil, mit einem Bandglied (12), das eine vorgegebene Querschnittsdicke und eine ungefähr kreisförmige Konfiguration hat, um einen inneren Bandumfang und einen äußeren Bandumfang zu bilden, einem Reibbelag (14), der um den inneren Bandumfang des Bandgliedes (12) herum angeordnet ist, wobei das Bandglied (12) zwei Endabschnitte (16) aufweist, die über den äußeren Bandumfang des Bandgliedes (12) zurückgefaltet (22) sind, einem Betätigungsglied an einem der Endabschnitte (16) des Bandgliedes (12) und einem Reaktionsglied (20) an dem anderen Endabschnitt (16) des Bandgliedes (12), dadurch gekennzeichnet, daß die Endabschnitte (16) eine solche Konfiguration haben, daß sie die Querschnittsdicke des Bandgliedes (12) verdoppeln und dadurch gebildet sind, daß ein Abschnitt des Bandgliedes (12) einfacher Dicke auf den äußeren Bandumfang des Bandgliedes (12) eben zurückgefaltet ist, wobei das Betätigungsglied (18) und das Reaktionsglied (20) aus den entsprechenden Endabschnitten (16) des Bandgliedes (12) gebildet und zu dem entsprechenden Faltabschnitt (22) beabstandet sind.

2. Band nach Anspruch 1, bei dem das Betätigungsglied (18) und das Reaktionsglied (20) gebildet sind, ehe die Endabschnitte (16) auf das Bandglied (12) zurückgefaltet werden, wobei das Betätigungsglied (18) an dem inneren Umfang des Bandgliedes (12) einfacher Dicke gebildet ist und das Betätigungsglied (18) einfacher Dicke auf den äußeren Bandumfang eben zurückgefaltet (22) ist, um die Querschnittsdicke an dem Endabschnitt (16) zu verdoppeln und bei dem der andere Endabschnitt (16) das Reaktionsglied (20) an dem inneren Umfang des Bandgliedes (12) einfacher Dicke bildet und das Reaktionsglied (20) einfacher Dicke auf den äußeren Bandumfang eben zurückgefaltet (22) ist, um die Querschnittsdicke an dem anderen Endabschnitt (16) zu verdoppeln.

3. Band nach Anspruch 1, bei dem das Betätigungsglied (18) und das Reaktionsglied (20) gebildet sind, nachdem die Endabschnitte (16) auf das Bandglied (12) zurückgefaltet (22) wurden.

4. Band nach Anspruch 1, bei dem das Betätigungsglied (18) gebildet ist, ehe ein Endabschnitt (16) auf das Bandglied (12) zurückgefaltet (22) wurde, und das Reaktionsglied (20) gebildet ist, nachdem der andere Endabschnitt (16) auf das Bandglied (12) zurückgefaltet (22) wurde, bei dem das Betätigungsglied (18) in dem Bandglied (12) einfacher Dicke gebildet ist und das Betätigungsglied (18) einfacher Dicke auf den äußeren Bandumfang eben zurückgefaltet (22) ist, um die Querschnittsdicke an dem Endabschnitt (16) zu verdoppeln, wobei der andere Endabschnitt (16) eine solche Konfiguration hat, daß die Querschnittsdicke dadurch verdoppelt wird, daß ein Bandgliedabschnitt einfacher Dicke auf den äußeren Umfang eben zurückgefaltet (22) wird und das Reaktionsglied (20) daran gebildet ist.

## Revendications

1. Elément de ruban pour emploi comme frein ou embrayage circonférentiel à friction autour d'un élément tournant, comprenant un élément de bande (12) ayant une épaisseur déterminée en section transversale et s'étendant dans une configuration généralement circulaire pour former la circonférence intérieure d'une bande et la circonférence extérieure d'une bande, une garniture de friction (14) disposée autour de la circonférence intérieure de l'élément de bande (12), l'élément de bande (12) ayant deux parties extrêmes (16) qui sont rabattues (22) sur la circonférence extérieure de l'élément de bande (12), un élément d'application (18) à l'une des parties extrêmes (16) de l'élément de bande (12), et un élément de réaction (20) à l'autre partie extrême (16) de l'élément de bande (12), caractérisé en ce que les parties extrêmes (16) sont réalisées de façon à doubler ladite épaisseur de la section transversale de l'élément de bande (12) et sont formées en pliant une partie à une seule épaisseur de l'élément de bande (12) en la rabattant à plat (22) sur la circonférence extérieure de l'élément de bande (12), les éléments d'application (18) et de réaction (20) étant formés à partir des parties extrêmes respectives (16) de l'élément de bande (12) et étant distantes de la zone de pliage respective (22).

2. Elément de ruban selon la revendication 1, dans lequel l'élément d'application (18) et l'élément de réaction (20) sont formés avant que les parties extrêmes (16) ne soient rabattues (22) sur l'élément de bande (12), où l'élément d'application (18) est formé sur la circonférence intérieure de l'élément de bande à une seule épaisseur (12), et l'élément d'application à une seule épaisseur (18) est rabattu à plat (22) sur la circonférence extérieure de la bande pour doubler ladite épaisseur de la section transversale à la partie extrême (16), et où l'autre partie extrême (16) a l'élément de réaction (20) formé sur la circonférence intérieure de l'élément de bande à une seule épaisseur (12) et l'élément de réaction à une seule épaisseur (20) est rabattu à plat (22) sur la circonférence extérieure de la bande pour doubler ladite épaisseur de la section transversale à l'autre partie extrême (16).

3. Elément de ruban selon la revendication 1, dans lequel l'élément d'application (18) et l'élément de réaction (20) sont formés après que les parties extrêmes (16) aient été rabattues (22) sur l'élément de bande (12).

4. Elément de ruban selon la revendication 1, dans lequel l'élément d'application (18) est formé avant qu'une partie extrême (16) soit rabattue (22) sur l'élément de bande (12), et l'élément de réaction (20) est formé après que l'autre partie extrême (16) a été rabattue (22) sur l'élément de bande (12), où l'élément d'application (18) est formé dans l'élément de bande à une seule épaisseur (12) et l'élément d'application à une seule épaisseur (18) est rabattu à plat (22) sur la circonférence extérieure de la bande pour doubler ladite épaisseur de la section transversale à la partie extrême (16), l'autre partie extrême (16) étant réalisée de façon à doubler ladite épaisseur de la section transversale en pliant une partie à une seule épaisseur de l'élément de bande (12) à plat (22) sur la circonférence extérieure et ayant l'élément de réaction (20) formé sur son dessus.
